# EUROPÄISCHE PATENTANMELDUNG

(11) **EP 4 357 646 A2**
(43) Veröffentlichungstag der Anmeldung: **24.04.2024**
(21) Anmeldenummer: 24160643.3
(22) Anmeldetag: 17.05.2019
(51) Int. Cl.: F16J 15/56

(54) **ZYLINDERANORDNUNG**

(30) Priorität: 18.05.2018 DE 202018102788 U
(62) Teilanmeldung aus: 19725965.8
(71) Anmelder: GENERAL AEROSPACE GMBH, 79427 Baden-Württemberg Eschbach (DE)
(72) Erfinder: Sailer, Wolfgang, 6290 Mayrhofen (AT)
(74) Vertreter: Höer, Daniela

(57) **Zusammenfassung**

Die Erfindung betrifft eine Zylinderanordnung, insbesondere Gasfeder, mit einem endseitig verschlossenen Zylinder (2), einem Kolben (3), einer Kolbenstange (4) und einer Stangendichtung (9) für die Kolbenstange (4), wobei im Zylinder (2) beidseits vom Kolben (3) Arbeitsräume (7, 8) ausgebildet sind, die ein Arbeitsgas (10) und ein Schmiermittel (11) enthalten,
wobei die Kolbenstange (4) einen inneren axial durchgehenden, die Arbeitsräume (7,8) durch den Kolben (4) hindurch verbindenden Hohlraum (17) mit einer nach außen führenden Überströmöffnung (18), insbesondere mehrseitigen Querbohrung, aufweist, wobei im Hohlraum (17) ein Füllventil (36) zum Einbringen und/oder Ablassen einer Gasfüllung und/oder von Schmiermittel (11) durch die hohle Kolbenstange (4) angeordnet ist, **wobei** der innere axiale Hohlraum (17) der Kolbenstange (4) in Axialrichtung der Kolbenstange (4) eine stetige Querschnittserweiterung aufweist, und dass in Offenstellung des Füllventils (36) zwischen der Querschnittserweiterung und einer damit zusammenwirkenden Abdichtung (38) ein Füllspalt (39) gebildet ist, dadurch gekennzeichnet, dass das Füllventil (36) an oder in der Nähe der Überströmöffnung (18) angeordnet ist.

## Beschreibung

Die Erfindung betrifft eine Zylinderanordnung, insbesondere eine Gasfeder, mit einem endseitig verschlossenen Zylinder, einem Kolben, einer Kolbenstange und einer Stangendichtung für die Kolbenstange, wobei im Zylinder beidseits vom Kolben Arbeitsräume ausgebildet sind, die ein Arbeitsgas und ein Schmiermittel enthalten.

Eine solche Gasfeder, die zwei Dämpfungsstufen hat, ist aus DE 29 05 030 bekannt. Die Kolbenstange hat einen die Arbeitsräume durch den Kolben hindurch verbindenden axialen Hohlraum mit einer nach außen führenden Überströmöffnung. Durch den Hohlraum können das Arbeitsgas und das Schmiermittel beim Ein- bzw. Ausfahren der Kolbenstange von dem einen in den anderen Arbeitsraum überströmen. Die Gasfeder weist außerdem eine als Ölpolsterdichtung ausgestaltete Schmiereinrichtung auf, die einen die Kolbenstange mit einem Schmierspalt umgebenden Schmierring hat, welcher zwischen dem Kolben und der Stangendichtung orstfest zu dieser angeordnet ist. Zwischen der Ölpolsterdichtung und der Stangendichtung ist eine Öldruckpolsterkammer gebildet. Die Ölpolsterdichtung wird von einer Durchlassöffnung für das Arbeitsgas und das Schmiermittel durchsetzt, welche die Öldruckpolsterkammer mit dem stangenseitigen Arbeitsraum der Gasfeder verbindet.

Während des Arbeitshubs wir in einer ersten Dämpfungsstufe beim Ausfahren der Kolbenstange die Ausfahrbewegung der Kolbenstange während des größten Teils des Arbeitshubs durch einen gesteuerten Gasstrom aus dem stangenseitigen Arbeitsraum in den bodenseitigen Arbeitsraum über die Überströmöffnung gedämpft. Dieser Dämpfungszustand hält an, bis die Überströmöffnung durch die Öldruckpolsterdichtung geschlossen wird. Während einer kurzen Zeit wird das Arbeitsgas über der Kolbenanordnung in dem stangeseitigen Arbeitsraum und der Öldruckpolsterkammer zusammengedrückt, wodurch die Kolbenststange verlangsamt wird. Das in dem stangenseitigen Arbeitsraum befindliche Schmiermittel wird vom Kolben auf die Ölpolsterdichtung zubewegt und durch die Durchlassöffnung der Ölpolsterdichtung gepresst. Sobald die Überströmöffnung in die Öldruckpolsterkammer eintritt, beginnt die zweite Dämpfungsstufe. Bei der zweiten Dämpfungsstufe strömen Gas und Öl aus dem stangenseitigen Arbeitsraum durch die Durchlassöffnung in die Öldruckpolsterkammer und von dort durch die Überströmöffnung und den Hohlraum der Kolbenstange in den bodenseitigen Arbeitsraum, d.h. die Durchlassöffnung und die Überströmöffnung arbeiten in Reihe. Die Öldruckpolsterkammer bildet ein Schmiermittelreservoir, welches die Schmierung der Stangendichtung verbessert und einem vorzeitigen Verschleiß der Stangenichtung entgegenwirkt.

Nach Angabe der Offenlegungsschrift sollen durch die Zweistufendämpfung störende Oszillationen der Kolbenstange am Ende des Arbeitshubs vermieden werden. Bei bestimmten Anwendungen, wie zum Beispiel der Lehnenverstellung von Sitzmöbeln, wird jedoch eine einstufige Dämpfung mit einer gleichmäßigen ruckfreien Ein- und Ausfahrbewegung der Kolbenstange bevorzugt. Das bei der aus DE 29 05 030 bekannten Gasfeder beim Hindurchtreten der Überströmöffnung durch die Ölpolsterdichtung auftretende Verlangsamen der Kolbenstange kann zwar dadurch reduziert werden, dass das Volumen Öldruckpolsterkammer vergrö-ßert wird. Hierdurch vergrößern sich aber auch die Baulänge und das Gewicht der Zylinderanordnung, was insbesondere bei Zylinderanordnungen ungünstig ist, die in ein Flugzeug eingebaut werden.

Aus DE 1 625 465 ist ferner eine Zylinderanordnung bekannt, die als blockierbare pneumatische Gasfeder ausgebildet ist. Bei dieser Gasfeder hat die Kolbenstange einen inneren axial durchgehenden Hohlraum mit einer radial nach außen zu dem stangenseitigen Arbeitsraum führenden Überströmöffnung. Die Blockiereinrichtung weist eine in dem Hohlraum angeordnete, vom freien Ende der Kolbenstange betätigbare Betätigungsstange und ein hiervon beaufschlagbares, am gegenüberliegenden Axialende der Kolbenstange befindliches Blockiermittel für den Durchlass der hohlen Kolbenstange auf. Zwischen der Überströmöffnung und dem freien Ende der Kolbenstange ist in dem Hohlraum ist eine Dichtung vorgesehen, die einen als Überströmkanal zum Verbinden der Arbeitsräume dienenden Abschnitt des Hohlraums zum freien Ende der Kolbenstange hin abdichtet. Dabei kommt die Dichtung an der Mantefläche der Betätigungsstange und an der Kolbenstange zur Anlage.

Ein in der Innenhöhlung der Kolbestange befindlicher Abschnitt der Betätigungsstange weist zwei in Axialrichtung der Kolbenstange zueinander versetzte Querbohrungen auf, die durch eine Längsbohrung miteinander verbunden sind. Im normalen Betrieb der Gasfeder sind beide Querbohrungen zwischen der Dichtung und dem freien Ende der Kolbenstange angeordnet. Zum Befüllen der Gasfeder mit dem Arbeitsgas kann die Betätigungsstange vom freien Ende der Kolbenstange aus soweit in die Innenhöhlung der Kolbenstange hineingeschoben werden, dass eine der beiden Querbohrungen unterhalb der Dichtung und die andere Querbohrung oberhalb der Dichtung angeordnet ist. Somit kann das einzufüllende Arbeitsgas vom freien Ende der Kolbenstange her durch einen zwischen dieser und der Betätigungsstange befindlichen Ringspalt hindurch an der Dichtung vorbei in den Arbeitsraum 7 eingefüllt oder - in entsprechender Weise - aus diesem abgelassen werden kann. Das auf diese Weise gebildete Füllventil hat jedoch den Nachteil, dass dass die Dichtung verschleißanfällig ist. Wenn die Dichtung nicht richtig abdichtet, kann bei geschlossenem Füllventil Arbeitsgas aus der Gasfeder austreten.

Aus der US 2017/305494 A1 ist schließlich eine gattungsgemäße Zylinderanordnung bekannt.

Es ist Aufgabe der vorliegenden Erfindung, eine verbesserte Zylinderanordnung aufzuzeigen. Insbesondere soll die Zylinderanordnung ein rückfreies Ausfahren der Kolbenstange aus dem Zylinder mit weitgehend konstanter Geschwindigkeit und kompakte Abmessungen ermöglichen. Außerdem soll die Zylinderanordnung eine lange Standzeit bzw. Lebensdauer aufweisen.

Die Erfindung löst diese Aufgabe in den Merkmalen des selbstständigen Anspruchs.

Die beanspruchte Zylinderanordnung enthält in ihren Arbeitsräumen ein Arbeitsgas. Zusätzlich kann ein Schmiermittel, z.B. ein Öl, vorhanden sein. Die Schmiereinrichtung benetzt die Stangendichtung mit dem Schmiermittel. Die Stangendichtung ist bevorzugt ringförmig und umschließt die Kolbenstange.

Die Benetzung der Stangendichtung kann rundum erfolgen. Die bevorzugt ringförmige Stangendichtung hat dabei über 360° verteilt mehrere zumindest lokale Auftreffstellen des Schmiermittels. Von den Auftreffstellen aus kann sich das Schmiermittel weiter in Umfangsrichtung verteilen.

Die Schmiereinrichtung verhindert einen Trockenlauf sowie einen vorzeitigen Verschleiß der Stangendichtung. Außerdem kann ein Schmiermittelfilm auf der Oberfläche der Kolbenstange gebildet werden. Die beanspruchte Schmiereinrichtung kann die Standzeit und Funktionsfähigkeit der Stangendichtung signifikant erhöhen. Die Schmiereinrichtung hat den Vorteil, dass die Schmierwirkung und Benetzung der Stangendichtung unabhängig von der Einbaulage der Zylinderanordnung sein kann.

Die Zylinderanordnung kann unterschiedlich eingesetzt werden. Sie eignet sich besonders für Betätigungszüge, insbesondere Seilzüge, zur Verstellung von Lehnen von Flugzeugsitzen oder dgl.. Sie kann eine beliebige Einbaulage haben, z.B. horizontal oder schräg liegend oder aufrecht mit nach oben oder unten ausfahrbarer Kolbenstange. Bedarfsweise kann die Zylinderanordnung auch in einer gewünschten Ausfahrstellung blockiert werden. In der blockierten Stellung kann noch eine für den Sitzkomfort günstige Federelastizität bestehen.

Die Zylinderanordnung kann in beliebig geeigneter Weise ausgebildet sein. Vorzugsweise ist sie als Gasfeder ausgebildet, die mit einem unter Druck stehenden Arbeitsgas befüllt ist. In einer vorteilhaften Ausgestaltung kann die Gasfeder als blockierbare Gasfeder ausgebildet sein.

Daneben sind andere Arten von Zylinderanordnungen mit einem enthaltenen Arbeitsgas und einem zumindest in geringfügiger Menge vorhandenen Schmiermittel möglich. Das Arbeitsgas kann zwischen den Arbeitsräumen mittels eines Durchlasses oder Bypasses im Kolben und/oder in einer hohlen Kolbenstange hin und her fließen. Hierbei kann auch das Schmiermittel in beiden Richtungen fließen.

Die Schmiereinrichtung weist einen Schmierring auf, der die Kolbenstange eng umgibt. Vorzugsweise umgibt er die Kolbenstange konzentrisch an ihrem gesamten Umfang. Der Schmierring kann an der Kolbenstange mit einer gewissen Abdichtung unter Bildung eines Schmierspalts anliegen. Dies kann für eine Benetzung des Kolbenstangenmantels bei Kolbenbewegungen sorgen und ebenfalls zur Verbesserung der Funktionssicherheit und Standzeit der Stangendichtung beitragen.

Der Schmierring kann eine oder mehrere zur Stangendichtung führende Durchlassöffnungen für das Arbeitsgas und das Schmiermittel aufweisen. Bei einer Mehrfachanordnung sind die Durchlassöffnungen vorzugsweise über den Umfang verteilt angeordnet, insbesondere gleichmäßig über den gesamten Umfang.

Bei den Kolbenbewegungen im Zylinder, insbesondere bei der Ausfahrbewegung, kann das Arbeitsgas mitsamt dem Schmiermittel durch die Durchlassöffnung(en) zur Stangendichtung gepumpt werden. Vorzugsweise sind die ein oder mehreren Durchlassöffnungen düsenartig ausgebildet. Sie können sich in Richtung zur Stangendichtung verengen. Der Einlassbereich der Durchlassöffnungen kann gegenüber dem Auslassbereich erweitert sein. Die Erweiterung kann sich in Umfangsrichtung erstrecken. Günstig ist auch eine Düsenausbildung, die einen schrägen, in Umfangsrichtung gerichteten Sprühstrahl erzeugt. Durch die gleiche Umfangsrichtung der Sprühstrahlen kann ein Sprühwirbel um die Kolbenstange und entlang an der Stangendichtung gebildet werden, der für eine besonders gute und wirksame Dichtungsbenetzung mit Schmiermittel sorgt.

Das Schmiermittel kann hochwirksam und mit dem notwendigen Druck gegen die Stangendichtung gespritzt werden, insbesondere gegen deren Stirnseite. In einer vorteilhaften Ausführung ist der Schmierring in Ausfahrrichtung der Stangendichtung vorgelagert. Vorzugsweise hat er einen axialen Abstand.

Der Schmierring ist in einer Aufnahme am Zylinder relativ ortsfest gehalten. Der Schmierring kann den Ringspalt zwischen dem Zylinder, insbesondere dessen Mantel, und der Kolbenstange bis auf die Durchlassöffnung(en) dicht verschlie-ßen. Dies verbessert die Schmierwirkung. Außerdem wird die Stangendichtung geschützt.

Der Schmierring kann eine die Ringöffnung umgebende und gegen die Kolbenstange wirkende Schmierdichtung aufweisen. Diese kann in einer vorteilhaften Ausgestaltung als ringförmige Lippendichtung ausgebildet sein. Diese kann bei geeigneter Auslegung den erwähnten Schmierspalt ermöglichen. Der Schmierspalt kann alternativ entfallen.

Zwischen dem Schmierring und der Kolbenstange kann ein Reservoir für Schmiermittel ausgebildet sein. Das Reservoir kann stirnseitig durch die an der Kolbenstange anliegende Schmierdichtung abgedichtet sein. Das Reservoir ist für die dauerhafte Benetzung der Kolbenstange und der Stangendichtung von Vorteil.

Der Schmierring kann in einer vorteilhaften Ausgestaltung in einen radial sich nach außen erstreckenden Ringkörper mit bevorzugt mehreren, insbesondere fünf, in Umfangsrichtung verteilt angeordneten axialen Durchlassöffnungen aufweisen. Durch die geringe Zahl der Durchlassöffnungen und den dadurch gebildeten kleinen Durchlassquerschnitt kann die Pumpwirkung und die wirksame Benetzung der Stangendichtung günstig beeinflusst werden.

Die Schmierdichtung kann eine axial vorstehende ringförmige Lippendichtung aufweisen. Diese weist vorzugsweise gegen die Ausfahrrichtung. Die Lippendichtung liegt mit ihrem äußeren Ende bzw. Lippenrand an der Kolbenstange an und sorgt für eine Abdichtung des zwischen dem Schmierring und der Kolbenstange befindlichen Reservoirs für das Schmiermittel. Die Abdichtung kann begrenzt sein und durch Untermaß und/oder schwachen Anpressdruck des Lippenrands eine Schmierspaltbildung ermöglichen.

In einer vorteilhaften Ausgestaltung kann der Ringkörper einen radialen Abstand zur Kolbenstange aufweisen. Hierdurch kann ein radialer Freiraum gebildet werden, der die Kolbenstange vollumfänglich umgibt und das Schmiermittelreservoir aufnehmen kann. Die Schmierdichtung, insbesondere Lippendichtung, kann axial vom inneren Randbereich des Ringkörpers abstehen. Sie ist dabei ebenfalls anfänglich in Radialrichtung ein Stück von der Kolbenstange zur Freiraumbildung und Schmiermittelaufnahme distanziert. Am freien Ende ist die Schmierdichtung, insbesondere Lippendichtung, nach innen gebogen und liegt mit dem Dichtmittel, insbesondere der Lippe, am Kolbenstangenmantel an. Hierdurch wird der Freiraum und das Schmiermittelreservoir axial und entgegen der Ausfahrrichtung abgedichtet.

Der Kolben kann eine stirnseitige Ausnehmung für die Schmierdichtung aufweisen. Er kann sich dadurch bei seiner axialen Ausfahrbewegung über die Schmierdichtung schieben. Die Stangendichtung und der Schmierdichtung sind bevorzugt in einem Endstück des Zylinders versenkt angeordnet. Der Kolben kann bedarfsweise am Ende seiner Ausfahrbewegung am Endstück anschlagen. Alternativ kann ein separater Anschlag vorgeordnet sein. Das Endstück kann einteilig oder mehrteilig sein.

Die Kolbenstange weist einen inneren axialen Hohlraum mit einer von dort nach außen führenden Überströmöffnung auf. Die Überströmöffnung kann als mehrseitige Querbohrung ausgebildet sein, die am Außenumfang der Kolbenstange mehrere, z.B. zwei oder mehr, offene Mündungen aufweist. Eine solche Überströmöffnung mit mehreren Mündungen hat Vorteile für das gleichmäßige Umpumpen und Verteilen des Arbeitsgases und des Schmiermittels bei den Kolbenbewegungen. Dies wirkt sich auch günstig auf die Schmierwirkung aus.

Die besagte Überströmöffnung ist vorzugsweise derart nah am Kolben angeordnet, dass im vorderen Endbereich des Kolbenwegs die Überströmöffnung unter dem Schmierring angeordnet ist. Sie kann sich dabei unter dem vorgenannten ringförmigen Freiraum unter dem Ringkörper und der Ringdichtung befinden. Bei der Kolbenbewegung kann das durch die Durchlassöffnungen(en) gepumpte Arbeitsgas und Schmiermittel die Stangendichtung kontaktieren und benetzen und kann dann unter dem Dichtring und durch die Überströmöffnung und den axialen Hohlraum der Kolbenstange abfließen.

Der axiale Hohlraum kann den vorerwähnten Durchlass oder Bypass für das Umpumpen bzw. Überströmen von Arbeitsgas und Schmiermittel zwischen den Arbeitsräumen bei der Kolbenbewegung bewirken. Zur Bildung einer blockierbaren Gasfeder kann der axiale Hohlraum am Auslassende mit einem steuerbaren Blockiermittel, insbesondere einem federbelasteten Blockierventil, bedarfsweise verschlossen werden. Bei geöffnetem Blockiermittel sind eine Kolbenbewegung und ein Überströmen von Arbeitsgas und Schmiermittel zwischen den Arbeitsräumen möglich. Bei geschlossenem Blockiermittel ist ein Überströmen nicht möglich mit der Folge, dass die blockierbare Gasfeder und ihr Kolben bzw. ihre Kolbenstange in der aktuellen Stellung festgehalten werden. Bei einer vereinfachten Ausführung einer Zylinderanordnung, insbesondere einer Gasfeder, kann das Blockiermittel entfallen.

Der axiale Hohlraum der Kolbenstange kann durchgehend ausgestaltet sein. Im Hohlraum kann dabei ein Füllventil zum Einbringen und/oder Ablassen einer Gasfüllung und/oder Schmiermittel durch die hohle Kolbenstange angeordnet sein. Diese Ausgestaltung der Zylinderanordnung hat eigenständige erfinderische Bedeutung. Sie lässt sich vorteilhafterweise zusammen mit der Schmiereinrichtung einsetzen. Sie kann aber auch bei Zylinderanordnungen ohne eine Schmiereinrichtung oder mit einer anderen Schmiereinrichtung eingesetzt werden. Eine solche Zylinderanordnung weist einen endseitig verschlossenen Zylinder, einen Kolben, eine Kolbenstange und eine Stangendichtung für die Kolbenstange sowie beidseits vom Kolben ausgebildete Arbeitsräume für ein Arbeitsgas und ggf. ein Schmiermittel auf.

Bevorzugt weist der innere axiale Hohlraum der Kolbenstange in Axialrichtung der Kolbenstange eine stetige Querschnittserweiterung auf, wobei in Offenstellung des Füllventils zwischen der Querschnittserweiterung und einer damit zusammenwirkenden Abdichtung ein Füllspalt gebildet ist. Durch die mit der Querschnittserweiterung zusammenwirkende Abdichtung wird eine lange Standzeit und ein geringer Verschleiß an der Abdichtung ermöglicht.

Das Füllventil ist erfindungsgemäß an oder in der Nähe der besagten Überströmöffnung angeordnet. Das Füllventil kann in einer Ausfahrrichtung der Kolbenstange der besagten Überströmöffnung nachgeordnet sein. In Öffnungsstellung des Füllventils kann ein gasdurchlässiger Füllspalt zwischen dem axialen Hohlraum und der besagten Überströmöffung ausgebildet werden. Mit einer Fülleinrichtung kann das Füllventil zur Öffnung des Füllspalts soweit axial verschoben werden, dass durch den axialen Hohlraum von der außerhalb des Zylinders befindlichen Öffnung her ein Arbeitsgas mit Druck eingespeist und durch die Überströmöffnung in den Zylinder gefüllt werden kann. Das Füllventil kann in einer vorteilhaften Ausgestaltung einen mit einer Abdichtung axial im Hohlraum beweglichen und federbelasteten Ventilkörper aufweisen. Der Ventilkörper kann hülsenartig sein. Dies ist vorteilhaft für eine eventuell erforderliche Betätigung eines Blockiermittels am anderen Kolbenstangenende.

Mit der Fülleinrichtung kann die Zylinderanordnung gespannt und der Kolben mitsamt Kolbenstange in die hintere Endstellung eingefahren werden. Hierbei kann bedarfsweise ein Blockiermittel geöffnet werden. Die Fülleinrichtung kann ein Anschlussstück mit einer Stangenaufnahme aufweisen, die über das äußere Kolbenstangenende gestülpt und zum Einschieben der Kolbenstange und des Kolbens benutzt werden kann. Das Anschlussstück kann auch eine Axialbohrung aufweisen, die an den axialen Hohlraum der Kolbenstange in Ansatzstellung anschließen kann. Über die Axialbohrung kann mittels einer seitlich mündenden Zuleitung ein Arbeitsgas in den Zylinder gepumpt werden. In der Axialbohrung kann ein Füllspieß mit radialem Spiel und endseitiger Abdichtung eingeführt werden. Mit dem Füllspieß kann das Füllventil in die Öffnungsstellung mit geöffnetem Füllspalt gegen die Kraft der rückstellenden Feder verschoben werden. Außerdem kann mit dem Füllspieß auch ein Blockiermittel am anderen Kolbenstangenende geöffnet werden. Der Füllspieß kann an seinem vorderen Endbereich hierfür entsprechend adaptiert sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Fig. 1:: eine Zylinderanordnung in einer Seitenansicht,
- Fig. 2:: die Zylinderanordnung von Figur 1 in einem zentralen Längsschnitt mit ausgefahrener Kolbenstange,
- Fig. 3:: die geschnittene Zylinderanordnung von Figur 2 mit eingefahrener Kolbenstange,
- Fig. 4:: die geschnittene Zylinderanordnung von Figur 2 mit einem geöffneten Blockiermittel am innenseitigen Ende der Kolbenstange,
- Fig. 5:: einen Querschnitt der Kolbenstange gemäß Schnittlinie V-V von Figur 2,
- Fig. 6:: eine abgebrochene und vergrößerte sowie geschnittene Detaildarstellung der Zylinderanordnung mit einem Dichtring, einer Stangendichtung, einem Füllventil und einer hohlen Kolbenstange,
- Fig. 6A bis 6C:: Darstellungen ähnlich Fig. 6, wobei die Kolbenstange beim Ausfahren aus dem Zylinder in unterschiedlichen Axialpositionen dargestellt ist und die Pfeile jeweils die Strömungswege des Arbeitsgases bzw. des Schmiermittels verdeutlichen,
- Fig. 7:: einen Längsschnitt durch einen Abschnitt der Zylinderanordnung entlang der in Figur 6C mit VII bezeichneten Schnittebene,
- Fig. 8:: eine Stirnansicht des Dichtrings,
- Fig. 9:: eine Schnittdarstellung des Dichtrings von Figur 8 gemäß Schnittlinie XI,
- Fig. 10:: eine abgebrochene und vergrößerte geschnittene Darstellung der Zylinderanordnung mit dem Füllventil in Öffnungsstellung,
- Fig. 11:: eine längs geschnittene Darstellung der Zylinderanordnung mit einer Fülleinrichtung,
- Fig. 12:: eine perspektivische Explosionsdarstellung einer Betätigungseinrichtung für die Blockiereinrichtung einer blockierbaren Gasfeder.

Die Erfindung betrifft eine Zylinderanordnung 1 und ein Verfahren zu deren Betrieb. Die Erfindung betrifft ferner eine Fülleinrichtung 15 für die Zylinderanordnung 1.

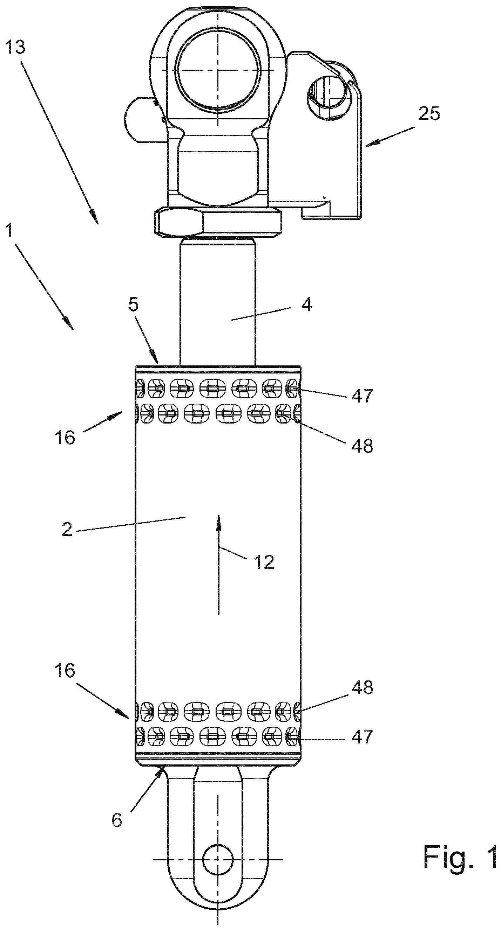

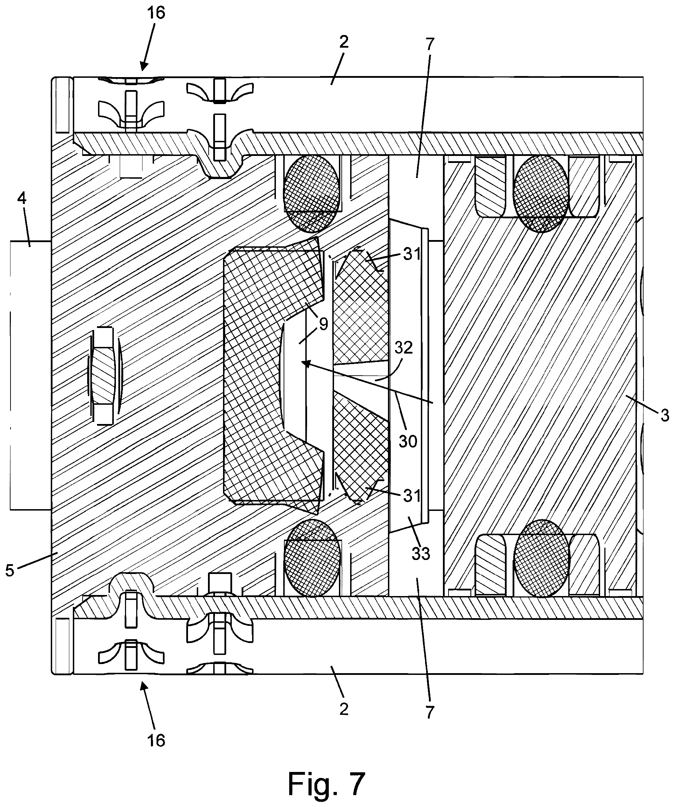

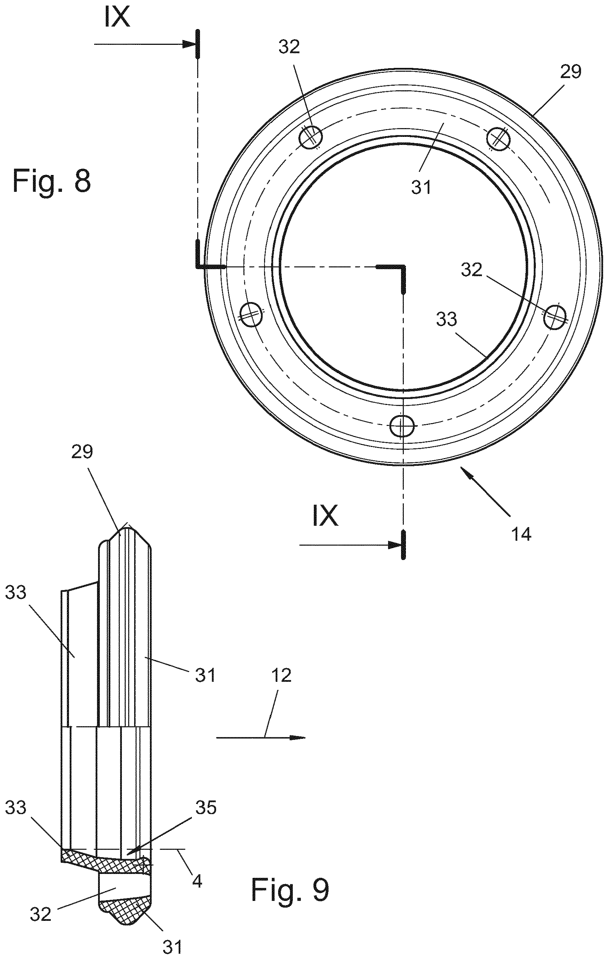

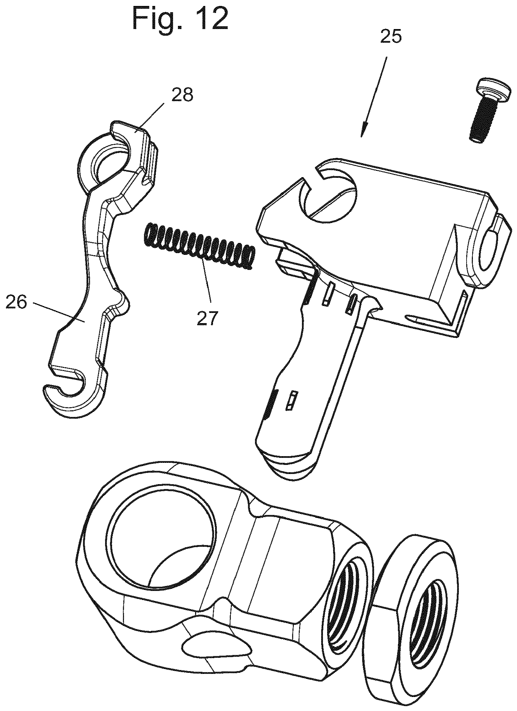

Figur 1 bis 12 zeigen eine Zylinderanordnung 1, insbesondere eine pneumatische Zylinderanordnung 1. Sie weist einen endseitig verschlossenen Zylinder 2 auf, in dem ein Kolben 3 und eine Kolbenstange 4 sowie eine Stangendichtung 9 für die Kolbenstange 4 angeordnet ist. Die Verschlüsse an den stirnseitigen Enden des Zylinders 2 werden von einem bodenseitigen Endstück 6 und einem gegenüber liegenden Endstück 5 gebildet, welches einen Kolbenstangenauslass und die Stangendichtung 9 aufweist. Am freien außenseitigen Ende der Kolbenstange 4 und am bodenseitigen Endstück 6 sind Anschlüsse, z.B. Lageraugen, für die Befestigung der Zylinderanordnung 1 angeordnet.

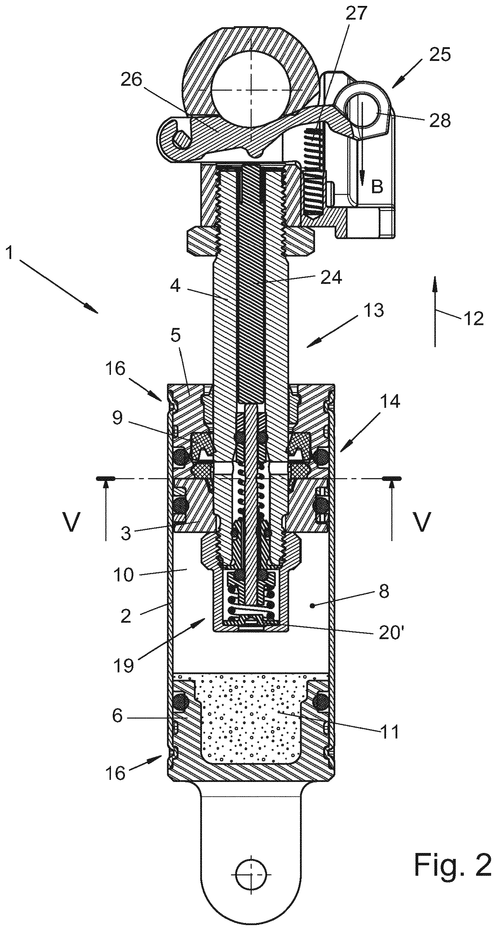

Wie Schnittdarstellungen von Figur 2 bis 4 verdeutlichen, sind im Zylinder 2 beidseits vom Kolben 3 Arbeitsräume 7, 8 ausgebildet, die ein Arbeitsgas 10 und auch ein zumindest in kleiner Menge vorhandenes Schmiermittel 11 enthalten.

Die gezeigte Zylinderanordnung 1 weist eine Schmiereinrichtung 14, ein Füllventil 36 und eine Pressverbindung 16 zwischen einem oder beiden Endstücken 5, 6 und dem außenseitig umgebenden Zylinder 2 auf. Die Schmiereinrichtung 14, das Füllventil 36 und die Pressverbindung 16 haben jeweils eigenständige erfinderische Bedeutung. Sie können im gezeigten Ausführungsbeispiel gemeinsam vorhanden sein. In anderen Ausführungsformen kann eine Zylinderanordnung 1 der vorgenannten Art nur eine dieser Komponenten 14, 36, 16 oder eine beliebige Kombination dieser Komponenten aufweisen.

Im gezeigten Ausführungsbeispiel ist die Zylinderanordnung 1 als blockierbare Gasfeder ausgebildet. Sie weist eine Blockiereinrichtung 13 auf, mit der das Überströmen des Arbeitsgases 10 und ggf. des Schmiermittels 11 zwischen den Arbeitsräumen 7, 8 blockiert werden kann. Die Blockiereinrichtung 13 weist hierfür ein am innerhalb des Zylinders 2 angeordneten Ende der Kolbenstange 4 befindliches Blockiermittel 19 und eine Betätigungseinrichtung 25 für dessen Betätigung auf.

In der gezeigten Ausführung weist die Kolbenstange 4 einen inneren und zentralen sowie axialen Hohlraum 17 auf, der sich über die gesamte Stangenlänge erstreckt und an den beiden Stirnseiten der Kolbenstange 4 mit einer Öffnung mündet. Der Kolben 3 ist am innenseitigen Ende der Kolbenstange 4 befestigt. Die Zylinderanordnung 1 hat eine in Figur 1 und 2 gezeigte Ausfahrrichtung 12 für die Ausfahrbewegung der Kolbenstange 4.

In der gezeigten Ausführungsform ist der Kolben 3 als fluiddichter Sperrkolben ausgebildet. Der Austausch des unter hohen Druck stehenden Arbeitsgases 10 und ggf. des Schmiermittels 11 erfolgt durch die hohle Kolbenstange. Diese weist eine vom Hohlraum 17 nach außen führende Überströmöffnung 18 auf. Diese kann eine oder mehrere Mündungen aufweisen. Im gezeigten Ausführungsbeispiel ist sie als mehrseitige Querbohrung mit zwei diametral zur Kolbenachse einander gegenüberliegenden Mündungen ausgebildet. Die Überströmöffnung 18 ist nahe an der auslassseitigen Stirnfläche des Kolbens 3 angeordnet. In Ausfahrrichtung 12 gesehen befindet sich die Überströmöffnung 18 hinter dem Kolben 3.

Die Kolbenstange 4 ragt durch den Kolben 3 und erstreckt sich bodenseitig ein Stück über diesen hinaus. An diesem Kolbenstangenende ist das Blockiermittel 19 angeordnet.

Das Blockiermittel 19 ist im gezeigten Ausführungsbeispiel als Blockierventil 20 ausgebildet. Es weist einen am Kolbenstangenende und im Hohlraum 17 angeordneten hohlen Ventilsitz 22 und eine Ventilverschlusskappe 21 auf, welche die Kolbenstangenöffnung freigeben oder verschließen kann. Die Ventilverschlusskappe 21 weist eine zentrale Ventilstange 23 auf, die sich durch den Ventilsitz 21 in den axialen Hohlraum 17 erstreckt. Die Ventilverschlusskappe 21 wird auf der Rückseite von einer Feder beaufschlagt und gegen die Stangenmündung gedrückt. Die Feder stützt sich an einer am Kolbenstangenende angeschraubten Stützkappe ab. Hier kann ein Drosselventil 20' ausgebildet sein, welches z.B. Ausfahrbewegungen der Kolbenstange 4 dämpft.

Durch die Ventilstange 23 kann das Blockierventil 20 geöffnet und geschlossen werden. Hierfür weist die Blockiereinrichtung 13 eine Stellstange 24 auf, die im Hohlraum 17 angeordnet ist und stirnseitig gegen die Ventilstange 23 drückt. Die Stellstange 24 ist axial beweglich in der Kolbenstange 4 angeordnet und kann an der Auslassseite der Kolbenstange 4 von der Betätigungseinrichtung 25 beaufschlagt werden. Wenn die Stellstange 24 eingedrückt bzw. in die Kolbenstange 4 eingeschoben wird, drückt sie auf die Ventilstange 23 und öffnet das federbelastete Blockierventil 20.

Die Betätigungseinrichtung 25 ist an dem außerhalb des Zylinders 2 befindlichen Ende der Kolbenstange 4 angeordnet. Sie besteht z.B. aus einem schwenkbar gelagerten Stellhebel 26, der mit einer Nocke stirnseitig gegen die Stellstange 24 drücken kann. Der Stellhebel 26 wird von einer Stellfeder 27 in Öffnungsstellung gedrückt. In dieser Stellung ist das federbelastete Blockiermittel 19 bzw. Blockierventil 20 geschlossen.

Der Stellhebel 26 weist am freien Ende einen Anschluss 28 für ein Betätigungsmittel, z.B. einen Seilzug, auf. Damit kann unter Aufbringen einer Betätigungskraft B der Stellhebel 26 gegen die rückstellende Feder 27 geschwenkt und das Blockiermittel 19 bzw. Blockierventil 20 geöffnet werden.

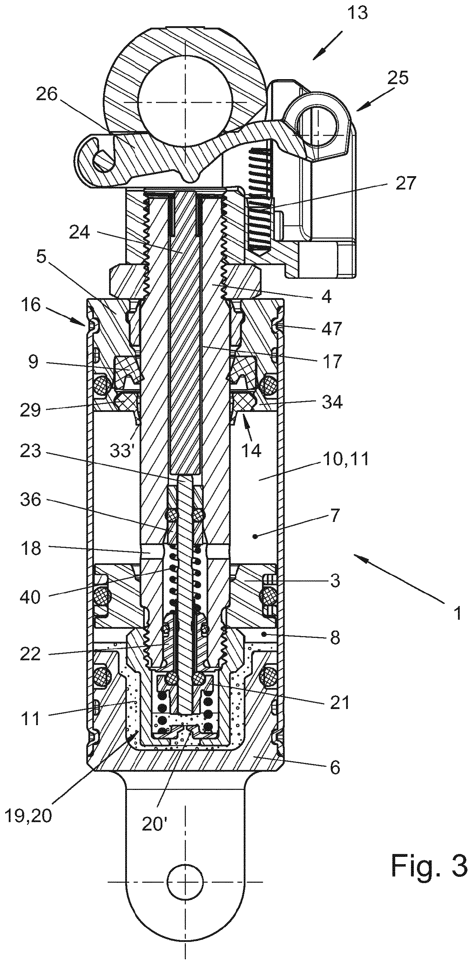

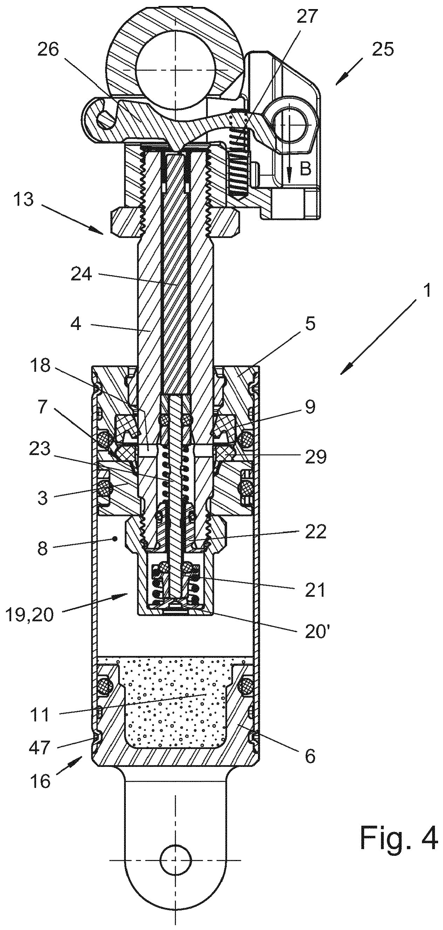

Figur 2 und 3 zeigen die Zylinderanordnung 1 mit einem jeweils geschlossenen Blockiermittel 19 bzw. Blockierventil 20 und mit unterschiedlichen Endlagen der Kolbenstange 4. Figur 2 zeigt eine ausgefahrene Endstellung und Figur 3 eine eingefahrene bzw. gespannte Endstellung. In Figur 4 ist die ausgefahrene Kolbenstange 4 mit einem geöffneten Blockiermittel 19 bzw. Blockierventil 20 dargestellt. In dieser Öffnungsstellung kann das Arbeitsgas 10 und ggf. das Schmiermittel 11 für die Ein- und Ausfahrbewegung der Kolbenstange 4 zwischen den Arbeitsräumen 7, 8 überströmen. Die auslassseitige wirksame Kolbenfläche rund um die Kolbenstange 4 ist kleiner als die bodenseitige resultierende Kolbenfläche, weshalb an dieser bodenseitigen Kolbenfläche eine druckbedingte Ausschubkraft wirkt, welche die Kolbenstange 4 ausfahren lässt.

Das bodenseitige Endstück 6 kann eine Vertiefung oder Kammer zur Aufnahme eines Vorrats an Schmiermittel 11 aufweisen. Beim Einfahren der Kolbenstange 4 kann das Blockierventil 20 in diese Kammer eintauchen und kann das dort je nach Einbaulage der Zylinderanordnung 1 befindliche Schmiermittel 11 verdrängen.

Die Zylinderanordnung 1 weist die vorerwähnte Schmiereinrichtung 14 auf. Diese dient zur Benetzung der ringförmigen Stangendichtung 9 mit dem Schmiermittel 11 und verhindert einen Trockenlauf sowie einen vorzeitigen Verschleiß der Stangendichtung 9. In der gezeigten Anordnung benetzt die Schmiereinrichtung 14 rundum die Stangendichtung 9 mit dem Schmiermittel 11. Dies geschieht an der Stirnseite der Stangendichtung 9.

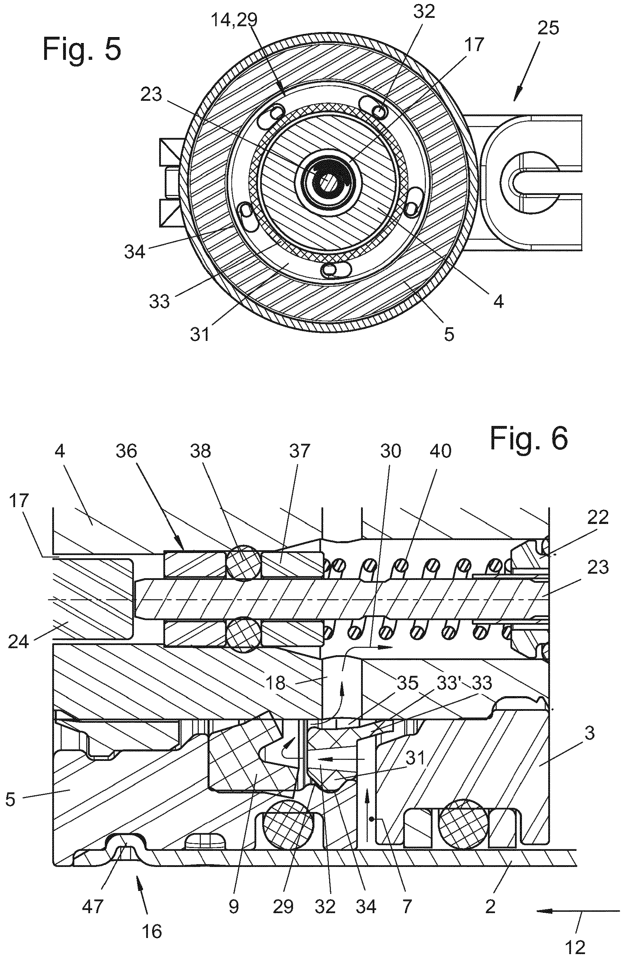

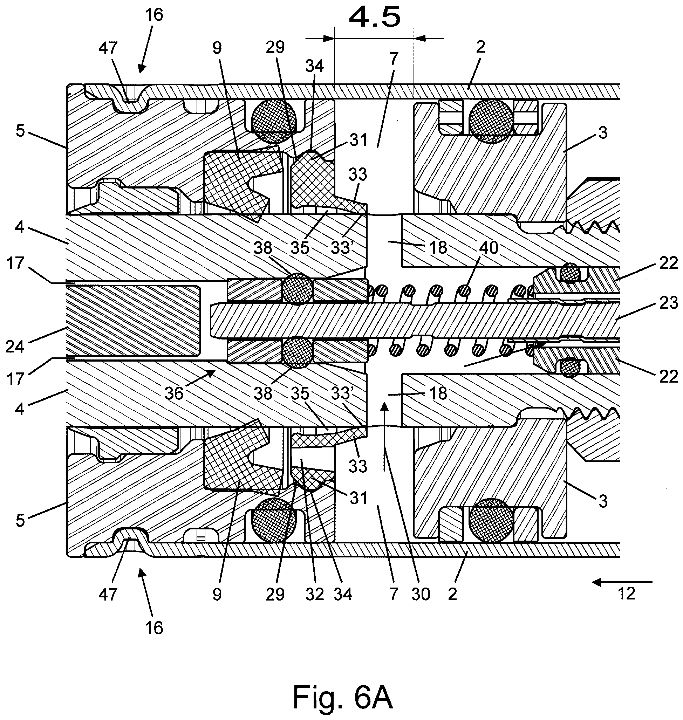

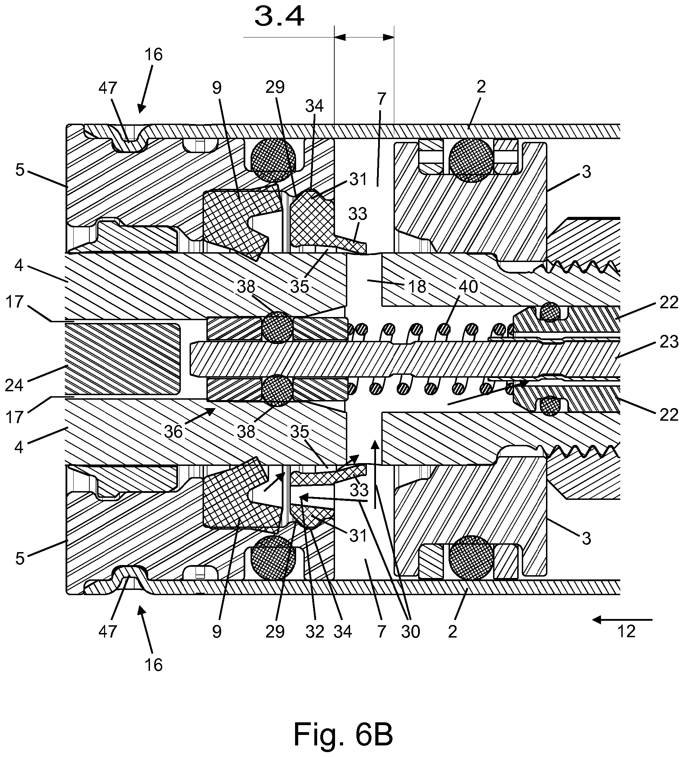

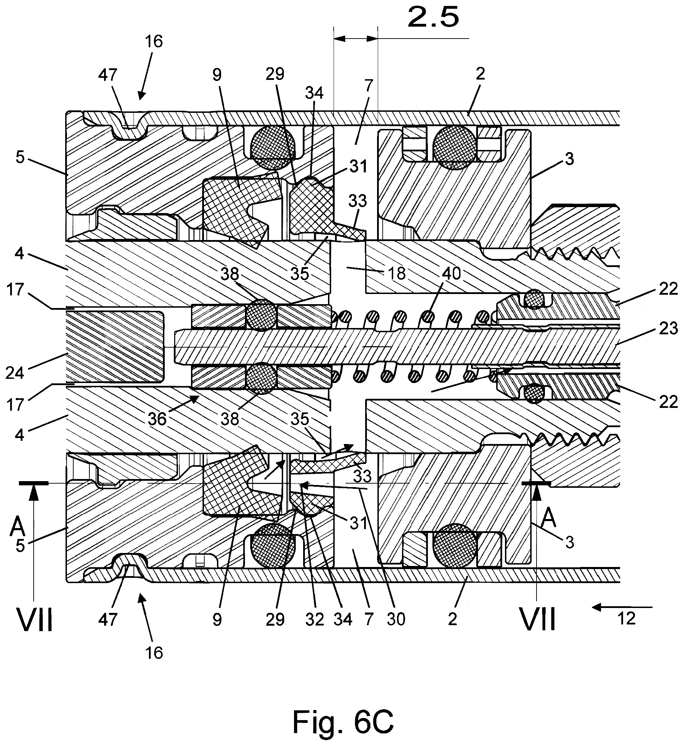

Wie die Schnittdarstellungen von Figur 2 bis 4 und die Detaildarstellung von Figur 6 verdeutlichen, ist die Stangendichtung 9 versenkt im auslassseitigen Endstück 5 angeordnet. Sie befindet sich dabei in einer Ausnehmung an der zum Kolben 3 weisenden Stirnseite des Endstücks 5. Die Stangendichtung 9 ist z.B. als Lippendichtung ausgebildet. Sie weist eine freigestellte und zur Kolbenstange 4 gerichtete ringförmige Dichtlippe auf.

Die Schmiereinrichtung 14 weist einen Schmierring 29 auf, der die Kolbenstange 4 eng umgibt. Die Umschließung kann mit einer begrenzten Dichtungswirkung unter Bildung eines Schmierspalts 33' erfolgen. Der Schmierring 29 ist außenseitig in einer ringartigen Aufnahme 34 am Zylinder 2 ortsfest gehalten. Die Aufnahme 34 kann am stirnseitigen Ende des Endstücks 5 ausgebildet sein. Die Aufnahme 34 kann z.B. als Ringnut ausgebildet sein und einen ringförmigen Höcker an der Außenseite des Schmierrings 29 formschlüssig und bedarfsweise lösbar aufnehmen.

Der Schmierring 29 ist der Stangendichtung 9 in Ausfahrrichtung 12 gesehen vorgelagert. Er kann dabei einen kleinen axialen Abstand haben.

Der Schmierring 29 weist mehrere, z.B. fünf, über den Umfang gleichmäßig verteilte Durchlassöffnungen 32 für das Arbeitsgas 10 und das Schmiermittel 11 auf, die zur Stangendichtung 9 führen. Der Schmierring 29 weist ferner eine zentrale Ringöffnung für die Kolbenstange 4 umgebende und gegen die Kolbenstange 4 wirkende Schmierdichtung 33 auf.

Der Schmierring 29 weist gemäß Figuren 5 bis 9 einen Ringkörper 31 auf, der sich von der zentralen Ringöffnung radial nach außen erstreckt und eine im Wesentlichen massive Ausbildung hat. Im Ringkörper 31 sind die axialen Durchlassöffnungen 32 angeordnet.

Der Ringkörper 31 weist einen radialen Abstand zur Kolbenstange 4 auf, wodurch zwischen ihnen ein ringförmiger Freiraum gebildet wird. Die Schmierdichtung 33 ist z.B. als Lippendichtung ausgebildet. Die Schmierdichtung 33 steht axial vom inneren Randbereich des Ringkörpers 31 ab. Sie ist axial gegen die Ausfahrrichtung 12 und zum Kolben 3 gerichtet. Die Schmierdichtung 33 hat ebenfalls im Anschlussbereich an den Schmierring 31 einen radialen Abstand, wobei sich das freie Dichtungsende und die hier ausgebildete ringförmige Dichtlippe zur Kolbenstange 4 gebogen bzw. gerichtet ist und hier dichtend unter Bildung des Schmierspalts 33' anliegt. Die Dichtlippe kann zur Spaltbildung ein kleines Untermaß gegenüber dem Außendurchmesser der Kolbenstange 4 aufweisen.

Alternativ oder zusätzlich kann die Dichtlippe eine verringerte Steifigkeit aufweisen und unter genügend axialem Druck aus dem Freiraum unter Öffnung des Spalts 33' nachgeben. Die Figuren 6, 6A, 6B, 6C verdeutlichen diese Ausbildung. In dem durch die radialen Abstände gebildeten ringförmigen Freiraum wird ein Reservoir 35 für Schmiermittel 11 gebildet.

Der Schmierring 29 verschließt den Ringspalt zwischen dem Zylinder 2 bzw. der Aufnahme 34 und der Kolbenstange 4 bis auf die axialen Durchlassöffnungen 32 und den kleinen Schmierspalt 33'. Die Durchlassöffnungen 32 befinden sich am Ringkörper 31 und an dem radial außerhalb der Schmierdichtung 33 gelegenen Bereich. Die Durchlassöffnungen 32 können düsenartig ausgebildet sein. Sie verengen sich in Richtung zur Stangendichtung 9.

Die Durchlassöffnungen 32 können jeweils einen trichterartig erweiterten Einlassbereich aufweisen. Dieser kann eine längliche, z.B. ovale Querschnittsform haben und kann sich in Umfangsrichtung erstrecken. Der verkleinerte und zur Stangendichtung 9 weisende Auslassbereich der Durchlassöffnung(en) 32 kann kreisrund oder ebenfalls oval ausgebildet sein. Er kann z.B. gemäß Figur 5 exzentrisch zum Einlassbereich angeordnet sein. Er kann auch eine Schrägausrichtung haben. Durch diese Gestaltung der Durchlassöffnungen 32 kann der Düseneffekt auch bei knappem Bauraum verstärkt werden. Zudem kann der austretende Sprühstrahl aufgefächert werden. Es kann auch ein schräg zur Stangendichtung 9 gerichteter Fluidstrahl mit einer Richtungskomponente in Umfangsrichtung der Stangendichtung 9 erzeugt werden. Der Verlauf der Durchlassöffnungen 32 ist dabei vorzugsweise derart gewählt ist, dass das Schmiermittel 11 beim Durchströmen durch die Durchlassöffnungen 32 mit einem Drall in Richtung auf die Stangendichtung 9 und/oder einen dazu benachbarten Bereich der Mantelfläche der Kolbenstange 4 austritt.

Der Kolben 3 weist an seiner auslassseitigen Stirnfläche eine ringartige Ausnehmung auf, die an die Schmierdichtung 33 adaptiert ist und diese in der Endstellung des Kolbens 3 aufnehmen kann. In der auslassseitigen Endstellung kann der Kolben 3 am Endstück 5 anschlagen. Die Stangendichtung 9 und der Schmierring 29 können hierbei versenkt an der zugewandten Stirnseite des Endstücks 5 aufgenommen sein. In einer anderen Ausführung kann ein Anschlag im Zylinder vorgesehen sein, an dem der Kolben 4 vor Erreichen des Endstücks 5 anschlägt.

Die Lage und Ausbildung des Schmierrings 29 und die Lage der Überströmöffnung 18 können aneinander angepasst sein. Wie die Figuren 6, 6A, 6B, 6C verdeutlichen, ist die Überströmöffnung 18 derart nah am Kolben 3 angeordnet, dass sie sich im vorderen Endbereich des Kolbenwegs unter den Schmierring 29 schiebt. Sie kommuniziert dabei mit dem vorgenannten ringförmigen Freiraum unter dem Schmierring 29 und mit dem Schmiermittelreservoir 35.

Die Figuren 6, 6A, 6B, 6C verdeutlichen die Funktion der Schmiereinrichtung 14 und des Schmierrings 29. Bei den Kolbenbewegungen wird das im stangenseitigen Arbeitsraum 7 befindliche Arbeitsgas 10 und das Schmiermittel 11 umgepumpt. Es wird dabei auch axial gegen den Schmierring 29 und durch dessen Durchlassöffnungen 32 gedrückt. Die Durchlassöffnungen 32 münden an der Stirnseite der Stangendichtung 9, wodurch das Schmiermittel 11 gegen die Stangendichtung 9 gespritzt wird und diese benetzt und geschmeidig hält. Im mittleren Bereich des Kolben- und Kolbenstangenwegs ist die Überströmöffnung 18 in Ausfahrrichtung 12 vor dem Schmierring 29 angeordnet. Das eingespritzte Schmiermittel 11 wird dabei im Reservoir 35 und im ringartigen Freiraum unter dem Schmierring 29 aufgenommen.

Am Endbereich des Kolbenwegs kommt gem. den Figuren 6, 6A, 6B, 6C die Überströmöffnung 18 in den Bereich des Schmierrings 29 und des Reservoirs 35. Das umgepumpte Arbeitsgas 10 und das Schmiermittel 11 können dadurch mit dem in den Figuren 6, 6A, 6B, 6C gezeigten Strömungswegen 30 durch die Durchlassöffnungen 32 zur Stangendichtung 9 und von dort zur Überströmöffnung 18 und in den axialen Hohlraum 17 sowie durch das geöffnete Blockiermittel 19 bzw. Blockierventil 20 in den bodenseitigen Arbeitsraum 8 gelangen. Beim Ausfahren der Kolbenstange 4 können das Arbeitsgas 10 und das Schmiermittel 11 entweder direkt aus dem stangenseitigen Arbeitsraum 7 in die Überströmöffnung 18 einströmen (Fig. 6A und 6B) und/oder das Arbeitsgas 10 und das Schmiermittel 11 strömen aus dem stangenseitigen Arbeitsraum 7 durch die Durchlassöffnungen 32 und den Raum für das Reservoir 35 hindurch in die Überströmöffnung 18 (Fig. 6B und 6C). In Fig. 6A beträgt der Abstand zwischen dem Kolben 3 und dem stangenseitigen Endstück 5 4,5 mm, in Fig. 6B 3,4 mm und in Fig. 6C 2,5 mm. Am Ende des Kolbenwegs kann ein erhöhter Druck im stangenseitigen Arbeitsraum 7 aufgebaut und eine verstärkte Benetzungs- und Schmierwirkung der Stangendichtung 9 erreicht werden. Der Schmierspalt 33' ist so klein, dass das Arbeitsgas 10 und das Schmiermittel 11 im Wesentlichen durch die Überströmöffnung 18 gezwungen werden und nur ein kleiner Teil durch den Schmierspalt 33' fließt.

Der axiale Hohlraum 17 kann in Ausfahrrichtung 12 hinter der Überströmöffnung 18 verschlossen sein. In diesem Bereich kann z.B. gem. den Figuren 6, 6A, 6B, 6C das Füllventil 36 angeordnet sein. Es dient zum Einbringen einer unter hohem Druck stehenden Gasfüllung durch die hohle Kolbenstange 4 in den Zylinder 2 und die Arbeitsräume 7, 8. Die Gasfüllung im Zylinder 2 kann über das Füllventil 36 auch abgelassen werden. Ferner kann Schmiermittel mittels des Füllventils 36 zugeführt und abgeführt werden.

Das Füllventil 36 ist in Ausfahrrichtung 12 der Überströmöffnung 18 nachgeordnet. Das Füllventil 36 wird z.B. von einem hülsenförmigen Ventilkörper 37 mit einer Abdichtung 38 gebildet. Durch die Hülsenöffnung kann sich die Ventilstange 23 in Auslassrichtung 12 erstrecken und mit der Stellstange 24 zusammenwirken. Der Ventilkörper 37 wird von einer bevorzugt drückenden Feder 40 in Ausfahrrichtung 12 beaufschlagt, die sich z.B. am Ventilsitz 22 abstützt. Sie drückt das Füllventil 36 in die Schließstellung, in der die Abdichtung 38 gegen die Wandung des Hohlraums 17 und die Ventilstange 23 abdichtet und einen Fluidaustritt in Ausfahrrichtung 12 verhindert.

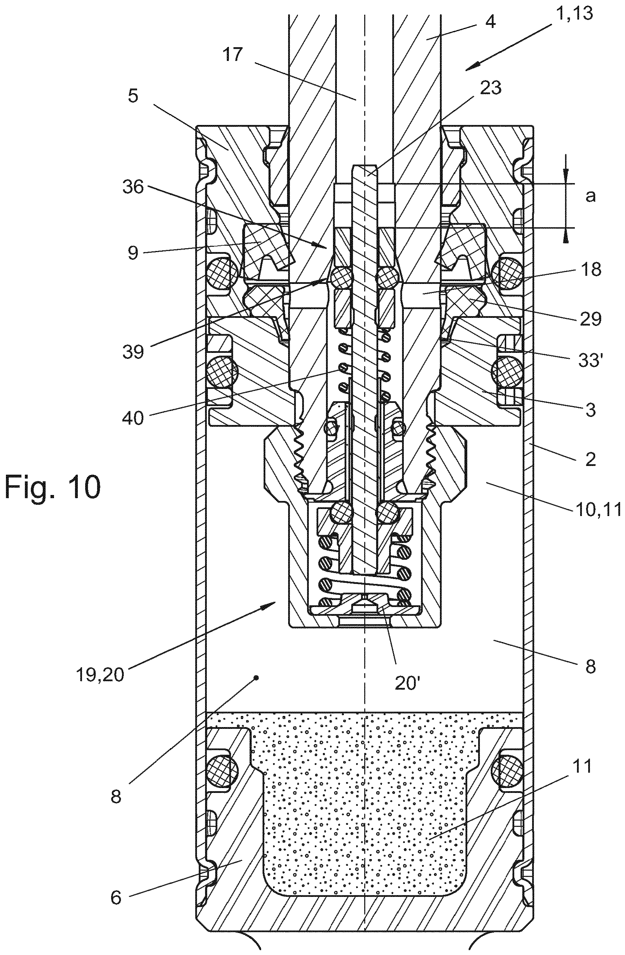

Zum Einfüllen eines Arbeitsgases 10 kann das Füllventil 36 gegen die Federkraft und entgegen der Ausfahrrichtung 12 gedrückt werden. Figur 10 zeigt den dabei möglichen Ventilweg a. Bei dieser Axialbewegung des Füllventils 36 wird ein Füllspalt 39 zwischen der Wandung des axialen Hohlraums 17 und dem Füllventil 36 gebildet. Der Füllspalt 39 mündet an der Überströmöffnung 18. Bei dieser Ventilbewegung wird die Abdichtung 38 außer Eingriff mit der Wandung des Hohlraums 17 gebracht. Hierbei kann die besagte Wandung eine trichterförmige oder konische Erweiterung in Richtung zur Überströmöffnung 18 aufweisen. Die Abdichtung 38 kann in diesen Erweiterungsbereich und auch in den Bereich der Überströmöffnung 18 gelangen. Durch den geöffneten Füllspalt 39 kann ein von außen durch den Hohlraum 17 eingefülltes Arbeitsgas 10 und ggf. auch Schmiermittel 11 in die Arbeitsräume 7, 8 und ggf. zurück fließen.

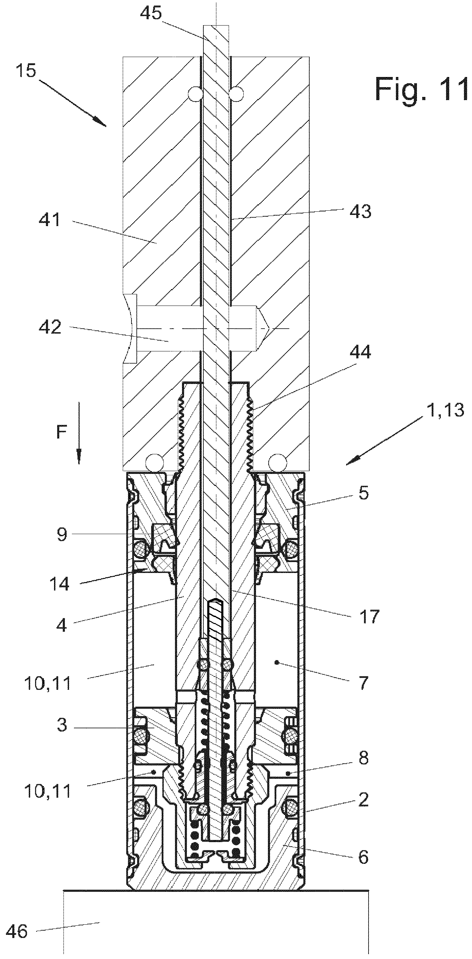

Figur 11 zeigt eine zum Befüllen eingesetzte Fülleinrichtung 15. Sie besteht z.B. aus einem Anschlussstück 41, welches an der Stirnseite eine formschlüssige Stangenaufnahme 44 für das außerhalb des Zylinders 2 befindliche Kolbenstangenende aufweist. Außerdem ist im Anschlussstück 41 eine Axialbohrung 43 angeordnet, die an den axialen Hohlraum 17 der Kolbenstange angepasst ist und in der ein Füllspieß 45 längsbeweglich und mit einer Abdichtung aufgenommen ist. Der Füllspieß 45 ist am vorderen Ende an das Füllventil 36 angepasst und kann dieses in die vorgenannte Öffnungsstellung gegen die Feder 40 schieben. Der Füllspiess 45 kann auch eine Anpassung an das Ende der Ventilstange 23 aufweisen und kann hierüber das Blockiermittel 19 bzw. Blockierventil 20 öffnen.

Das Anschlussstück 41 weist ferner eine seitliche Zuleitung 42 für das Arbeitsgas 10 auf. Die Zuleitung 42 mündet an der Axialbohrung 43. Das eingebrachte Arbeitsgas 10 kann über die Axialbohrung 43 und den Hohlraum 17 bei geöffnetem Füllventil 36 in den Zylinder 2 und die Arbeitskammern 7, 8 strömen. Der Füllspiess 45 kann im Durchmesser kleiner als die Öffnungen 43, 17 sein.

Wie Figur 11 verdeutlicht, kann das Anschlussstück 41 auf die Kolbenstange 4 aufgesetzt werden und kann zum Spannen der Zylinderanordnung sowie zum Einfahren der Kolbenstange 4 benutzt werden. Hierfür wird das Anschlussstück 41 mit der Stangenaufnahme 44 auf die Kolbenstange 4 aufgesetzt und in Axialrichtung mit einer Anpresskraft F gegen den Zylinder 2 gedrückt. Dieser ist am rückwärtigen Ende von einem Widerlager 46 abgestützt. Bei eingefahrener Kolbenstange 4 befindet sich die Überströmöffnung 18 im stangenseitigen Arbeitsraum 7.

Bei einem geöffneten Blockiermittel 19 bzw. Blockierventil 20 ist auch ein Überströmen des eingefüllten Arbeitsgases 10 und ggf. Schmiermittels 11 in den bodenseitigen Arbeitsraum 8 möglich.

Für den Füllvorgang wird die Betätigungseinrichtung 25 von der Kolbenstange 4 entfernt und dann die Kolbenstange 4 in der vorgenannten Weise mit dem angepressten Anschlussstück 41 eingefahren. Anschließend kann mit dem eingesetzten Füllspiess 45 das Füllventil 36 geöffnet und die Gaszufuhr aktiviert werden. Am Ende des Füllvorgangs kann der Füllspiess 45 entfernt, die Gaszuführung geschlossen und das Anschlussstück 41 abgenommen werden.

Figur 1 und die Schnittdarstellungen von Figur 2 bis 4 verdeutlichen die eingangs genannte Pressverbindung 16 zwischen dem Zylinder 2 und einem stirnseitigen Verschluss des Zylinders, der an ein oder beiden Stirnseiten vorhanden sein kann und der z.B. jeweils von einem Endstück 5, 6 gebildet werden kann. Die Pressverbindung 16 weist jeweils mehrere, insbesondere zwei umfängliche Ringanordungen von jeweils mehreren diskreten Pressmarken 47, 48 auf. Die Pressmarken 47, 48 können die gezeigte längliche bzw. ovale Form mit einer Ausrichtung im Umfangsrichtung haben.

Die Pressmarken 47 sind in ihrer jeweiligen Ringanordnung in Umfangsrichtung hintereinander und mit einem gegenseitigen Abstand angeordnet. Die Ringanordnungen der Pressmarken 47, 48 sind dabei in Umfangsrichtung gegenseitig versetzt. Die versetzten Pressmarken 47 können in Umfangsrichtung gegenseitig auf Lücke angeordnet sein. Der umfangsseitige Abstand der Pressmarken 47, 48 in ihrer jeweiligen Ringanordnung kann kleiner als die Erstreckung der Pressmarken 47, 48 in Umfangsrichtung sein. Die auf Lücke gesetzten Pressmarken 47,48 überlappen dabei in Axialrichtung gesehen einander.

Die Pressmarken 47,48 können von außen eingebrachte Verstemmungen am Zylinder 2 sein. Hierbei werden z.B. mit einem Stemm- oder Prägewerkzeug bevorzugt ovale Verformungen in den Mantel des Zylinders 2 eingebracht und nach innen gedrückt. Diese greifen gem. Figur 2 bis 3 dabei in entsprechend vorbereitete vertiefte Aufnahmen am jeweiligen Endstück 5, 6. Die Aufnahmen können ringförmig ausgebildet sein. Sie können auch als diskrete und in Umfangsrichtung voneinander beabstandete Aufnahmevertiefungen ausgebildet sein.

Die diskreten Pressmarken 47,48 können in Axialrichtung gesehen dicker als die Aufnahme(n) sein. Beim Verstemmen der Pressmarken 47,48 kann eine auch in Umfangsrichtung formschlüssige Verbindung mit einer ringförmigen Aufnahme geschaffen werden. Hierdurch können auch hohe Torsionskräfte übertragen werden.

Abwandlungen der gezeigten und beschriebenen Ausführungsform sind in verschiedener Weise möglich. Nachfolgend sind einige Möglichkeiten genannt.

Die Zylinderanordnung 1 kann ohne Blockiereinrichtung 13 ausgebildet sein. Sie kann als einfache Gasfeder ausgeführt sein.

Daneben sind andere konstruktive Ausbildungen der bevorzugt pneumatischen Zylinderanordnung 1 möglich. Das Blockiermittel 19 kann variieren. Der Durchlass oder Bypass zwischen den Arbeitsräumen 7, 8 kann z.B. im Kolben 3 angeordnet sein. Die Kolbenstange 4 kann dabei massiv ausgebildet sein. Die Kolbenstange 4 kann sich in einer andererseits durch den Zylinder 2 und den Kolben 3 erstrecken sowie am anderen Zylinderende austreten. Die Schmiereinrichtung 14 kann bei einer solchen Ausführung an beiden Stirnenden des Zylinders 2 angeordnet sein. Die Zylinderanordnung 1 kann als Pneumatikzylinder mit externer gesteuerter Druckgaszufuhr und einem einseitig oder beidseitig beaufschlagten Kolben 3 ausgebildet sein. Ferner ist es möglich, mehrere Kolben 3 und Kolbenstangen 4 sowie mehrere Stangendichtungen 9 vorzusehen.

## Patentansprüche

1. Zylinderanordnung, insbesondere Gasfeder, mit einem endseitig verschlossenen Zylinder (2), einem Kolben (3), einer Kolbenstange (4) und einer Stangendichtung (9) für die Kolbenstange (4), wobei im Zylinder (2) beidseits vom Kolben (3) Arbeitsräume (7, 8) ausgebildet sind, die ein Arbeitsgas (10) und ein Schmiermittel (11) enthalten,
wobei die Kolbenstange (4) einen inneren axial durchgehenden, die Arbeitsräume (7,8) durch den Kolben (4) hindurch verbindenden Hohlraum (17) mit einer nach außen führenden Überströmöffnung (18), insbesondere mehrseitigen Querbohrung, aufweist, wobei im Hohlraum (17) ein Füllventil (36) zum Einbringen und/oder Ablassen einer Gasfüllung und/oder von Schmiermittel (11) durch die hohle Kolbenstange (4) angeordnet ist, **wobei** der innere axiale Hohlraum (17) der Kolbenstange (4) in Axialrichtung der Kolbenstange (4) eine stetige Querschnittserweiterung aufweist, und dass in Offenstellung des Füllventils (36) zwischen der Querschnittserweiterung und einer damit zusammenwirkenden Abdichtung (38) ein Füllspalt (39) gebildet ist, **dadurch gekennzeichnet, dass** das Füllventil (36) an oder in der Nähe der Überströmöffnung (18) angeordnet ist.

2. Zylinderanordnung nach Anspruch 1, **dadurch gekennzeichnet, dass** sich der lichte Querschnitt des Hohlraums (17) an der Querschnittserweiterung entgegen der Ausfahrrichtung (12) der Kolbenstange (4) erweitert.

3. Zylinderanordnung nach Anspruch 1 oder 2, **dadurch gekennzeichnet, dass** das Füllventil (36) in einer Ausfahrrichtung (12) der Kolbenstange (4) der Überströmöffnung (18), insbesondere mehrseitigen Querbohrung, nachgeordnet ist.

4. Zylinderanordnung nach einem der Ansprüche 1 bis 3, **dadurch gekennzeichnet, dass** in Öffnungsstellung des Füllventils (36) ein gasdurchlässiger Füllspalt (39) zwischen dem axialen Hohlraum (17) und der Überströmöffnung (18), insbesondere mehrseitigen Querbohrung, ausgebildet wird.

5. Zylinderanordnung nach einem der Ansprüche 1 bis 4, **dadurch gekennzeichnet, dass** das Füllventil (36) einen mit der Abdichtung (38) axial im Hohlraum (17) beweglichen und federbelasteten (40) Ventilkörper (37) aufweist.

6. Zylinderanordnung nach Anspruch 1, **dadurch gekennzeichnet, dass** der Ventilkörper (37) an oder in der Nähe der Überströmöffnung (18), insbesondere mehrseitigen Querbohrung, angeordnet ist, wobei in Öffnungsstellung die Abdichtung (38) geöffnet und der Füllspalt (39) zwischen dem Ventilkörper (37) und der Überströmöffnung (18), insbesondere mehrseitigen Querbohrung, ausgebildet ist.

7. Zylinderanordnung nach einem der Ansprüche 1 bis 6, **dadurch gekennzeichnet, dass** eine Schmiereinrichtung (14) zum Benetzen der Stangendichtung (9) mit dem Schmiermittel (11) mit einem die Kolbenstange (4) eng und ggf. mit einem Schmierspalt (33') umgebenden Schmierring (29) vorgesehen ist und das Schmiermittel (11) mittels des Füllventils (36) zugeführt und abgeführt werden kann, wobei der Schmierring (29) derart ausgestaltet und bezüglich seiner Abmessungen an die axiale Abmessung der mindestens einen Überströmöffnung (18) angepasst ist, dass dieser beim Ausfahren der Kolbenstange (4) in keiner axialen Position der Kolbenstange (4) die Überströmöffnung (18) vollständig verschließt.

8. Zylinderanordnung nach Anspruch 7, **dadurch gekennzeichnet, dass** eine Schmierdichtung (33) eine axial vorstehende, bevorzugt gegen die Ausfahrrichtung (12) weisende, ringförmige Lippendichtung aufweist.

9. Zylinderanordnung nach Anspruch 7 oder 8, **dadurch gekennzeichnet, dass** der Schmierring (29) mehrere über den Umfang verteilte, zur Stangendichtung (9) führende Durchlassöffnungen (32) für das Arbeitsgas (10) und das Schmiermittel (11) aufweist.

10. Zylinderanordnung nach Anspruch 9, **dadurch gekennzeichnet, dass** die mindestens eine Durchlassöffnung (32) düsenartig ausgebildet ist.

11. Zylinderanordnung nach Anspruch 10, **dadurch gekennzeichnet, dass** die mindestens eine Durchlassöffnung (32) derart ausgebildet ist, dass sie beim Durchströmen mit dem Arbeitsgas (10) und/oder dem Schmiermittel (11) einen Sprühstrahl erzeugt, der eine in Umfangsrichtung der Kolbenstange (4) weisende Komponente hat.

12. Zylinderanordnung nach Anspruch 10 oder 11, **dadurch gekennzeichnet, dass** der Verlauf der Durchlassöffnungen (32) derart gewählt ist, dass das Schmiermittel (11) beim Durchströmen durch die Durchlassöffnungen (32) mit einem Drall in Richtung auf die Stangendichtung (9) und/oder einen dazu benachbarten Bereich der Mantelfläche der Kolbenstange (4) austritt.

13. Zylinderanordnung nach einem der vorhergehenden Ansprüche, **dadurch gekennzeichnet, dass** zwischen dem Schmierring (29) und der Kolbenstange (4) ein Reservoir (35) für Schmiermittel (11) ausgebildet ist.

14. Zylinderanordnung nach einem der vorhergehenden Ansprüche, **dadurch gekennzeichnet, dass** der Schmierring (29) der Stangendichtung (9) in einer Ausfahrrichtung (12) der Kolbenstange (4) vorgelagert ist.

15. Zylinderanordnung nach einem der vorhergehenden Ansprüche, **dadurch gekennzeichnet, dass** der Schmierring (29) in einer Aufnahme (34) am Zylinder (2) relativ ortsfest gehalten ist.
